# FASCICULE DE BREVET EUROPEEN

(11) **EP 2 448 671 B1**
(45) Date de publication et mention de la délivrance du brevet: **23.09.2015**
(21) Numéro de dépôt: 10734171.1
(22) Date de dépôt: 15.06.2010
(51) Int. Cl.: B01J 23/62, B01J 23/644, B01J 35/00, C10G 35/09, B01J 27/185, B01J 27/186, B01J 37/02, B01J 37/24, B01J 23/64

(54) **CATALYSEUR MULTI-METALLIQUE PRESENTANT UNE FORTE INTERACTION METALLIQUE**
MULTIMETALLISCHER KATALYSATOR MIT EINER STARKEN WECHSELWIRKUNG
MULTIMETALLIC CATALYST HAVING A STRONG METAL INTERACTION

(30) Priorité: 01.07.2009 FR 0903225
(43) Date de publication de la demande: 09.05.2012
(73) Titulaire: IFP Energies nouvelles, 92852 Rueil-Malmaison Cedex (FR)
(72) Inventeur: AVENIER, Priscilla, F-38000 Grenoble (FR); LACOMBE, Sylvie, F-69390 Vernaison (FR); JUMAS, Jean-Claude, F-34830 Jacou (FR); OLIVIER-FOURCADE, Josette, F-34830 Jacou (FR)
(86) Numéro de dépôt international: PCT/FR2010/000444
(87) Numéro de publication internationale: WO 2011/001042

(56) Documents cités:
- EP-A1- 1 656 991
- WO-A2-2008/087273
- US-A- 4 416 804
- US-A- 4 522 935
- US-A1- 2003 220 192

## Description

### DOMAINE DE L'INVENTION

La présente invention concerne le domaine de la conversion des hydrocarbures et plus spécifiquement du reformage de charges hydrocarbonées en présence d'un catalyseur pour produire des coupes essences. L'invention concerne également des formulations catalytiques améliorées à base d'au moins un métal du groupe du platine utilisables pour cette conversion, ainsi que leur mode de préparation.

### ART ANTERIEUR

De nombreux brevets décrivent l'addition de promoteurs à des catalyseurs à base de platine afin d'améliorer leurs performances en reformage de charges hydrocarbonées. Ainsi le brevet US 2,814,599 décrit l'addition de promoteurs tels que le gallium, l'indium, le scandium, l'yttrium, le lanthane, le thallium ou l'actinium, à des catalyseurs à base de platine ou de palladium.

Le brevet US 4,522,935 décrit des catalyseurs de reformage comprenant du platine, de l'étain, de l'indium et un composé halogéné déposé sur un support dans lesquels le rapport atomique indium/platine est supérieur à 1,14.

Le brevet FR 2 840 548 décrit un catalyseur sous forme d'un lit homogène de particules comprenant une matrice amorphe, au moins un métal noble, au moins un halogène et au moins un métal additionnel. Ce métal additionnel est préférentiellement choisi dans le groupe constitué par l'étain, le germanium, le plomb, le gallium, l'indium, le thallium, le rhénium, le manganèse, le chrome, le molybdène et le tungstène.

Le phosphore est connu par ailleurs pour augmenter les rendements en composés hydrocarbonés de strictement plus de 4 atomes de carbone (C5+) et en particulier en produits aromatiques. Cette propriété est revendiquée dans les brevets US 2,890,167, US 3,706,815, US 4,367,137, US 4,416,804, US 4,426,279 et US 4,463,104. Plus récemment, il a été décrit dans le brevet US2007/0215523 que l'ajout de quantités diluées de phosphore, moins de 1 % pds, stabilise le support en permettant une meilleure rétention de surface spécifique et de chlore pendant son utilisation dans des procédés de reformage catalytique.

Les brevets US 6,864,212 et US 6,667,270 décrivent un support contenant du bismuth et du phosphore répartis de façon homogène et utilisé pour la préparation d'un catalyseur de reformage catalytique de naphta hydrotraité. D'après ces brevets, l'ajout de bismuth seul dans le support permet de ralentir la formation de coke et le déclin de l'activité, mais tout en diminuant le rendement en C5+, alors que l'ajout de phosphore seul augmente ce rendement, sans améliorer la stabilité du catalyseur. La combinaison de ces deux éléments permet de ralentir encore plus la formation de coke tout en présentant les meilleures sélectivités pour des teneurs en Bi comprises entre 0,10 et 0,06 %pds, et une teneur en P de 0,3 % pds. Ces deux brevets ne revendiquent pas d'autres éléments.

Par ailleurs, dans le brevet EP1656991, un catalyseur comprenant du platine, de l'étain, un support de haute densité composé d'au moins un oxyde inorganique dont l'alumine et le phosphate, et éventuellement un autre élément parmi le germanium, le gallium, le rhénium, le phosphore, l'indium ou un mélange de ceux-ci, est caractérisé par le fait qu'au moins 33 % pds de l'étain est associé avec le platine sous forme d'un cluster Pt-Sn spécifique observé par Môssbauer. L'intérêt de ce catalyseur réside dans l'augmentation de sa stabilité et la minimisation de la production de coke par rapport aux catalyseurs connus de l'art.

Le document WO2008/087273 concerne un catalyseur comprenant un métal M du groupe du platine, au moins un promoteur X1 sélectionné dans le groupe constitué par l'étain, le germanium et le plomb, et éventuellement au moins un promoteur X2 sélectionné dans le groupe constitué par le gallium, l'indium, et le thallium, un composé halogéné et un support poreux, dans lequel le rapport atomique X1/M et éventuellement X2/M est compris entre 0,3 et 8, le rapport Hᵢᵣ/M mesuré par adsorption d'hydrogène est supérieur à 0,40 et l'indice IBM de bimétallicité mesuré par titrage hydrogène/oxygène est supérieur à 108. Le catalyseur est obtenu en particulier en déposant le promoteur X1 en deux fois (deux étapes distinctes), une première étape située avant l'introduction de l'élément du groupe du platine, et une deuxième étape située après l'introduction de l'élément du groupe du platine.

### RESUME DE L'INVENTION

L'invention concerne un catalyseur comprenant au moins un métal M du groupe du platine, de l'étain, un promoteur phosphore, un composé halogéné, un support poreux d'alumine et au moins un promoteur X1 sélectionné dans le groupe constitué par le gallium, l'indium, l'antimoine, ledit catalyseur sous forme réduite possédant par spectroscopie Mössbauer de ¹¹⁹Sn un signal présentant une valeur d'éclatement quadripolaire comprise entre 0 et 0,45 mm/s, et un déplacement isomérique IS compris entre 1,5 et 2,4 mm/s par rapport à CaSnO₃, ledit signal représentant entre 1 et 30 % de l'aire totale des signaux, ledit catalyseur étant préparé par un procédé de préparation comprenant les étapes suivantes :
a) introduction du ou des promoteurs X1 et du phosphore à un sol d'un précurseur d'alumine préformé, puis mise en forme du support,
b) introduction de l'étain lors de l'introduction du ou des promoteurs X1 et du phosphore lors de l'étape a) et avant la mise en forme du support, les étapes a) et b) étant simultanées,
c) séchage du produit obtenu à l'issue de l'étape b),
d) calcination du produit obtenu à l'étape c) à une température comprise entre 350 et 650 °C,
e) dépôt d'au moins un métal M du groupe du platine,
f) séchage sous flux du gaz neutre ou sous flux de gaz contenant de l'oxygène, à une température modérée et n'excédant pas 150 °C,
g) calcination du produit obtenu à l'étape f) à une température comprise entre 350 et 650 °C.

### DESCRIPTION DETAILLEE DE L'INVENTION

L'invention concerne un catalyseur comprenant au moins un métal M du groupe du platine, de l'étain, un promoteur phosphore, un composé halogéné, un support poreux d'alumine et au moins un promoteur X1 sélectionné dans le groupe constitué par le gallium, l'indium, l'antimoine, de manière préférée dans le groupe constitué par le gallium et l'indium, de manière encore plus préférée le promoteur X1 est l'indium ledit catalyseur sous forme réduite possédant par spectroscopie Môssbauer de ¹¹⁹Sn un signal présentant une valeur d'éclatement quadripolaire comprise entre 0 et 0,45 mm/s, et un déplacement isomérique IS compris entre 1,5 et 2,4 mm/s par rapport à CaSnO₃, ledit signal représentant entre 1 et 3 0% de l'aire totale des signaux, de préférence entre 4 et 20 %, ledit catalyseur étant préparé par le procédé de préparation décrit ci-dessus.

Les catalyseurs selon l'invention conduisent à des performances catalytiques améliorées. En particulier, la sélectivité de ces catalyseurs est accrue vers la formation de composés en C5+ (c'est-à-dire de composés comprenant au moins 5 atomes de carbone), alors que la formation de coke est fortement diminuée.

Le procédé de préparation du catalyseur comprend une étape d'introduction du phosphore et du ou des promoteur(s) X1 pendant une étape de préparation du support.

Le rapport atomique Sn/M est généralement compris entre 0,5 et 4,0, de manière plus préférée entre 1,0 et 3,5, et de manière très préférée entre 1,3 et 3,2. Le rapport X1/M est généralement compris entre 0,1 et 5,0, de manière plus préférée entre 0,2 et 3,0, et de manière très préférée entre 0,4 et 2,2. Le rapport P/M est généralement compris entre 0,2 et 30,0, de manière plus préférée entre 0,5 et 20,0, et de manière très préférée entre 1,0 et 15,0. La teneur en métal M est généralement comprise entre 0,01 à 5 % poids, de manière plus préférée entre 0,01 à 2 % et de manière encore plus préférée entre 0,1 à 1 % poids.

Le métal M est généralement le platine ou le palladium, de manière très préférée le platine. Le composé halogéné est généralement sélectionné dans le groupe constitué par le fluor, le chlore, le brome et l'iode. La teneur en composé halogéné est généralement comprise entre 0,1 à 15,0 % poids, de manière plus préférée entre 0,1 à 8,0 % poids, de manière encore plus préférée entre 0,2 à 5 % poids. Si le composé halogéné est le chlore, la teneur en chlore est généralement comprise entre 0,0 et 5,0 % poids, de préférence entre 0,5 à 2,0 % poids.

Les analyses qui permettent de déterminer la structure électronique locale de l'étain sont effectuées par spectroscopie Môssbauer conventionnelle à l'aide d'une source de radiation γ Ba^{119m}SnO₃ avec une activité nominale de 10 mCi. Le spectromètre opère en mode transmission avec un générateur de mouvement à accélération constante fonctionnant en mode triangulaire avec un analyseur à 512 canaux contrôlé par un micro-ordinateur. Le détecteur est un cristal de Nal (T1) de 0,1 mm d'épaisseur. L'échelle est calibrée en utilisant un spectre standard de fer α à 6 lignes obtenu avec une source ⁵⁷Co(Rh). Tous les déplacements isomériques sont donnés par rapport à CaSnO₃. Le logiciel ISO est utilisé pour déconvoluer les spectres expérimentaux en profils lorentziens et pour déterminer les différents paramètres (W. Künding, Nucl. Instrum. Method., 75, 336 (1969)).

Le catalyseur sous forme réduite selon l'invention possède généralement par spectroscopie Môssbauer de ¹¹⁹Sn un signal présentant une valeur d'éclatement quadripolaire comprise entre 0 et 0,45 mm/s, et un déplacement isomérique IS compris entre 1,5 et 2,4 mm/s par rapport à CaSnO₃, ledit signal représentant entre 1 et 30 % de l'aire totale des signaux, de préférence entre 4 et 20 %.

D'après les attributions publiées dans J. Olivier Fourcade et al, ChemPhysChem 2004, 5, 1734, le procédé de préparation entraîne donc sur le catalyseur réduit la formation d'espèces d'étain Sn° alliées à une partie des atomes du métal du groupe du platine. L'alliage MₓSn_{y} ainsi observé est révélateur d'une très forte interaction entre les atomes du métal du groupe du platine et l'étain.

Le support est de l'alumine. Selon l'invention, ledit support poreux se présente avantageusement sous forme de billes, d'extrudés, de pastilles ou de poudre. De manière très avantageuse, ledit support se présente sous forme de billes ou d'extrudés. Le volume poreux du support est de préférence compris entre 0,1 et 1,5 cm³/g, de manière plus préférée compris entre 0,4 et 0,8 cm³/g. Par ailleurs, ledit support poreux présente une surface spécifique comprise avantageusement entre 50 et 600 m²/g, de préférence entre 100 et 400 m²/g, voire entre 150 et 300 m²/g.

Le procédé de préparation du catalyseur selon l'invention comprend généralement les étapes suivantes :
a) introduction du ou des promoteurs X1 et du phosphore à un sol d'un précurseur d'alumine préformé, puis mise en forme du support,
b) introduction de l'étain lors de l'introduction du ou des promoteurs X1 et du phosphore lors de l'étape a) et avant la mise en forme du support, les étapes a) et b) étant simultanées,
c) séchage du produit obtenu à l'issue de l'étape b),
d) calcination du produit obtenu à l'étape c) à une température comprise entre 350 et 650 °C,
e) dépôt d'au moins un métal M du groupe du platine,
f) séchage sous flux du gaz neutre ou sous flux de gaz contenant de l'oxygène, à une température modérée et n'excédant pas 150 °C,
g) calcination du produit obtenu à l'étape f) à une température comprise entre 350 et 650 °C.

L'étain peut n'être introduit que partiellement avant la mise en forme du support, le procédé comprenant à ce moment une étape supplémentaire de dépôt d'une fraction complémentaire de l'étain sur le support, soit entre les étapes d) et e), suivie ou non d'un séchage et d'une calcination, soit entre les étapes e) et f), soit après l'étape g), suivie d'un séchage et d'une calcination.

La calcination de l'étape g) est généralement menée en présence d'air, éventuellement enrichi en oxygène ou en azote.

Les promoteurs X1, P et Sn peuvent être introduits au moyen de toute technique connue de l'homme du métier. Lors de leur introduction dans le support, les promoteurs X1, P et Sn peuvent être ajoutés par mélange, coprécipitation, dissolution sans être limitatif.

L'introduction d'étain est simultanée avec celle des précurseurs X1 et P.

Les précurseurs sont ajoutés à un sol de précurseur de l'oxyde majoritaire préformé.

La mise en forme du support est conduite selon les techniques de l'art antérieur de mise en forme du support telles que les procédures de mise en forme par extrusion ou par coagulation en gouttes (Oil-Drop selon la terminologie anglo-saxonne).

Les précurseurs de X1 sont de plusieurs types selon la nature de X1 et peuvent être utilisés seuls ou en mélange. Dans le cas de l'indium, des halogénures, des nitrates, sulfates, du perchlorate, cyanure, hydroxyde d'indium conviennent. Des précurseurs de type halogénures, nitrates, sulfates, cyanures, hydroxyde et oxyhalogénures de gallium peuvent être utilisés. Dans le cas de l'antimoine, des nitrates, sulfates et hydroxyde d'antimoine conviennent.

Les précurseurs de l'étain peuvent être minéraux ou de type organométallique, éventuellement de type organométallique hydrosoluble. Différents précurseurs peuvent être utilisés, seuls ou en mélange. En particulier, l'étain peut être choisi et ce, de façon non limitative, dans le groupe formé par les composés halogénés, hydroxydes, carbonates, carboxylates, sulfates, tartrates et nitrates. Ces formes de l'étain peuvent être introduites dans le milieu de préparation du catalyseur telles quelles ou générées in situ (par exemple par introduction d'étain et d'acide carboxylique). Les précurseurs de type organométallique à base d'étain peuvent être par exemple SnR4, où R représente un groupement alkyle, par exemple le groupement butyle, Me₃SnCl, Me₂SnCl₂, Et₃SnCl, Et₂SnCl₂, EtSnCl₃, iPrSnCl₂ et les hydroxydes Me₃SnOH, Me₂Sn(OH)₂, Et₃SnOH, Et₂Sn(OH)₂, les oxydes (Bu₃Sn)₂O, l'acétate Bu₃SnOC(O)Me. De façon préférée, les espèces halogénées, en particulier chlorées, d'étain seront utilisées. En particulier, SnCl₂ ou SnCl₄ seront employés avantageusement.

Les promoteurs Sn, X1 et P ayant été introduits dans le support ou sur le support préalablement formé dans le cas de l'étain, le protocole de préparation des catalyseurs selon l'invention nécessite une calcination avant le dépôt du métal M du groupe du platine (étape d). Cette calcination est de préférence menée à une température comprise entre 350 et 650 °C et de préférence comprise entre 400 et 600 °C et de manière encore plus préférée comprise entre 400 et 550 °C. La montée en température peut être régulière ou inclure des paliers de température intermédiaires, ces paliers étant atteints avec des vitesses de montée en température fixes ou variables. Ces montées en température peuvent donc être identiques ou différer par leur vitesse (en degré par minute ou par heure). L'atmosphère de gaz utilisé durant la calcination contient de l'oxygène, de préférence entre 2 et 50 % en volume et de manière plus préférée entre 5 et 25 %. De l'air peut donc également être utilisé lors de cette étape de calcination.

Après obtention du support, un dépôt d'au moins un métal du groupe du platine M est réalisé (étape e). Dans cette étape, le métal M peut être introduit par imprégnation à sec ou en excès de solution, en utilisant un précurseur ou un mélange de précurseurs contenant un métal M du groupe du platine. L'imprégnation peut être réalisée en présence d'espèces agissant sur l'interaction entre le précurseur du métal M et le support. Ces espèces peuvent être, et sans être limitatif, des acides minéraux (HCl, HNO3) ou organiques (types acides carboxyliques ou polycarboxyliques), et des composés organiques de type complexants. De manière préférée l'imprégnation est réalisée selon toute technique connue de l'homme de l'art permettant d'obtenir une répartition homogène du métal M au sein du catalyseur.

Les précurseurs du métal M font partie du groupe suivant, sans que cette liste soit limitative : acide hexachloroplatinique, acide bromoplatinique, chloroplatinate d'ammonium, chlorures de platine, dichlorocarbonyl dichlorure de platine, chlorure de platine tétra-amine.

A ce stade, le catalyseur contenant X1, Sn, P et le platine est séché (étape f), sous atmosphère neutre ou contenant de l'oxygène (de l'air pouvant être utilisé), à une température modérée et n'excédant pas de préférence 250 °C. De préférence, le séchage est mis en oeuvre à une température inférieure ou égale à 200 °C et sur une durée de quelques minutes à quelques heures.

Cette étape est alors suivie d'une calcination du produit obtenu à l'étape f. Cette calcination est de préférence menée en présence d'air. Cet air peut également être enrichi en oxygène ou en azote. De préférence, la teneur en oxygène de ce gaz atteint 0,5 à 30,0 % volumique et de façon encore plus préférée 2 à 25 %.

Cette calcination est menée à une température intervenant entre 350 et 650 °C et de préférence entre 400 et 650 °C et de manière encore plus préférée entre 450 et 550 °C. La rampe de température peut éventuellement contenir des paliers en température.

Lorsque les divers précurseurs utilisés dans la préparation du catalyseur selon l'invention ne contiennent pas d'halogène ou contiennent de l'halogène en quantité insuffisante, il peut être nécessaire d'ajouter un composé halogéné lors de la préparation. Tout composé connu de l'homme du métier peut être utilisé et incorporé à l'une quelconque des étapes de la préparation du catalyseur selon l'invention. En particulier, il est possible d'utiliser des composés de type Friedel et Crafts tels que du chlorure ou du bromure d'aluminium. Il est également possible d'utiliser des composés organiques tels que des halogénures de méthyle ou d'éthyle, par exemple du dichlorométhane, du chloroforme, du dichloroéthane, du méthyle chloroforme ou du tétrachlorure de carbone.

Le chlore peut également être ajouté au catalyseur selon l'invention au moyen d'un traitement d'oxychloration. Un tel traitement peut par exemple être effectué à 500 °C pendant 4 heures sous un débit d'air contenant la quantité de chlore gazeux nécessaire pour déposer la quantité de chlore souhaitée et une quantité d'eau avec un rapport molaire H₂O/Cl voisin par exemple de 20.

Le chlore peut aussi être ajouté au moyen d'une imprégnation par une solution aqueuse d'acide chlorhydrique. Un protocole typique consiste à imprégner le solide de façon à introduire la quantité de chlore souhaitée. Le catalyseur est maintenu en contact avec la solution aqueuse pendant une durée suffisamment longue pour déposer cette quantité de chlore, puis le catalyseur est essoré et séché à une température comprise entre 80 et 150 °C, puis enfin calciné sous air à une température comprise entre 450 °C et 650 °C.

Typiquement, le catalyseur est soumis à un traitement de réduction. Cette étape de réduction est généralement effectuée sous atmosphère d'hydrogène dilué ou pur et à une température avantageusement comprise entre 400 °C et 600 °C, de préférence entre 450 °C et 550 °C.

### EXEMPLES:

Les exemples qui suivent illustrent l'invention.

### Exemple 1 (comparatif) :

### Préparation d'un catalyseur A : Pt/(Al₂O₃-Sn)-Cl

Un support sous forme de billes d'alumine, contenant 0,3% poids d'étain, avec un diamètre moyen de 1,2 mm est préparé en mettant en contact du dichlorure d'étain avec un hydrosol d'alumine obtenu par hydrolyse de chlorure d'aluminium. On fait ensuite passer l'hydrosol d'alumine ainsi obtenu dans une colonne verticale remplie d'huile additivée. Les sphères ainsi obtenues sont traitées thermiquement jusqu'à 600°C de façon à obtenir des billes de bonne résistance mécanique. Le support ainsi obtenu présente une surface BET de 205 m²/g.

Un catalyseur A est préparé sur ce support, en déposant 0,3% poids de platine et 1% poids de chlore sur le catalyseur final. A 100 g du support alumine contenant de l'étain, on ajoute 400 cm³ d'une solution aqueuse d'acide hexachloroplatinique et d'acide chlorhydrique. On laisse en contact 4 heures puis on essore. On sèche à 120 °C puis on calcine pendant 2 heures à 500°C sous un débit d'air de 100 litres par heure, avec une vitesse de montée en température de 7 °C par minute. Le catalyseur A obtenu après calcination contient 0,29 % poids de platine, 0,30 % poids d'étain et 1,02 % poids de chlore.

### Exemple 2 (comparatif) :

### Réparation d'un catalyseur B : Pt/(Al₂O₃-Sn-In)-Cl

Un support de billes d'alumine, contenant 0,3 % poids d'étain et 0,3 % poids d'indium, avec un diamètre moyen de 1,2 mm, est préparé en mettant en contact du dichlorure d'étain et du nitrate d'indium avec un hydrosol d'alumine obtenu par hydrolyse de chlorure d'aluminium. On fait ensuite passer l'hydrosol d'alumine ainsi obtenu dans une colonne verticale remplie d'huile additivée. Les sphères ainsi obtenues sont traitées thermiquement jusqu'à 600 °C de façon à obtenir des billes de bonne résistance mécanique. Le support ainsi obtenu présente une surface BET de 201 m²/g.

Un catalyseur B est préparé à partir de ce support en ciblant les mêmes teneurs en platine et chlore que pour l'exemple 1. Le catalyseur B obtenu après calcination contient 0,29 % poids de platine, 0,29 % poids d'étain, 0,30 % poids d'indium et 1,05 % poids de chlore.

### Exemple 3 (comparatif) :

### Réparation d'un catalyseur C : Pt/(Al₂O₃-Sn-P)-Cl

Un support de billes d'alumine, contenant 0,3 % poids d'étain et 0,4 % poids de phosphore, avec un diamètre moyen de 1,2 mm, est obtenu de façon similaire à l'exemple 1 en mettant en contact du dichlorure d'étain et de l'acide phosphorique avec un hydrosol d'alumine. Le support ainsi obtenu présente une surface BET de 198 m²/g.

Un catalyseur C est préparé à partir de ce support en ciblant les mêmes teneurs en platine et chlore que pour l'exemple 1. Le catalyseur C obtenu après calcination contient 0,30 % poids de platine, 0,31 % poids d'étain, 0,39 % poids de phosphore et 1,00 % poids de chlore.

### Exemple 4 (selon l'invention) :

### Réparation d'un catalyseur D : Pt/(Al2O3-Sn-In-P)-Cl

Un support de billes d'alumine, contenant 0,3 % poids d'étain 0,3 % poids d'indium et 0,4 % poids de phosphore avec un diamètre moyen de 1,2 mm, est obtenu de façon similaire à l'exemple 1 en mettant en contact du dichlorure d'étain, du nitrate d'indium et de l'acide phosphorique avec un hydrosol d'alumine. Le support ainsi obtenu présente une surface BET de 196 m²/g.

Un catalyseur D est préparé à partir de ce support en ciblant les mêmes teneurs en platine et chlore que pour l'exemple 1. Le catalyseur D obtenu après calcination contient 0,30 % poids de platine, 0,31 % poids d'étain, 0,32 % poids d'indium, 0,38 % poids de phosphore et 1,00 % poids de chlore.

### Exemple 5 (selon l'invention) :

### Préparation d'un catalyseur E : Pt/(Al2O3-Sn-In-P)-Cl

Un support de billes d'alumine est préparé de la même manière que l'exemple 4, avec les mêmes teneurs en étain et en phosphore, mais en n'introduisant que 0,2 % poids d'indium. Le support ainsi obtenu présente une surface BET de 210 m²/g.

Un catalyseur E est préparé à partir de ce support en ciblant les mêmes teneurs en platine et chlore que pour l'exemple 1. Le catalyseur E obtenu après calcination contient 0,31 % poids de platine, 0,31 % poids d'étain, 0,22 % poids d'indium, 0,40 % poids de phosphore et 1,02 % poids de chlore.

### Exemple 6 (comparatif) :

### Préparation d'un catalyseur F : Pt-In/(Al₂O₃-Sn-P)-Cl

Un support est préparé en ciblant les mêmes teneurs en étain et phosphore que pour l'exemple 3. Le support ainsi obtenu présente une surface BET de 180 m²/g.

Un catalyseur F est préparé sur ce support, en ciblant 0,3 % poids de platine, 0,3 % poids d'indium et 1 % poids de chlore sur le catalyseur final.

A 100 g du support alumine contenant de l'étain et du phosphore, on ajoute 400 cm³ d'une solution aqueuse d'acide hexachloroplatinique et d'acide chlorhydrique. On laisse en contact 4 heures puis on essore. On sèche à 90°C puis on met en contact avec 200 cm³ d'une solution aqueuse de nitrate d'indium en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7 °C par minute. Le catalyseur F obtenu après calcination contient 0,30 % poids de platine, 0,32 % poids d'étain, 0,29 % poids d'indium, 0,41 % poids de phosphore et 1,04 % poids de chlore.

### Exemple 7 (comparatif) :

### Préparation d'un catalyseur G : Pt-In-P/(Al₂O₃-Sn)-Cl

Un support est préparé en ciblant les mêmes teneurs en étain que pour l'exemple 1.

Un catalyseur G est préparé sur ce support, en ciblant 0,3 % poids de platine, 0,3 % poids d'indium, 0,4 % poids de phosphore et 1 % poids de chlore sur le catalyseur final. Le support ainsi obtenu présente une surface BET de 209 m²/g.

A 100 g du support alumine contenant de l'étain et du phosphore, on ajoute 400 cm³ d'une solution aqueuse d'acide hexachloroplatinique et d'acide chlorhydrique. On laisse en contact 4 heures puis on essore. On sèche à 90 °C puis on met en contact avec 200 cm³ d'une solution aqueuse de nitrate d'indium et d'acide phosphorique en présence d'acide chlorhydrique. On laisse en contact 4 heures, on essore, on sèche à 120 °C puis on calcine pendant 2 heures à 500 °C sous un débit d'air de 100 litres par heure, avec une vitesse de montée en température de 7°C par minute. Le catalyseur G obtenu après calcination contient 0,30 % poids de platine, 0,31 % poids d'étain, 0,33 % poids d'indium, 0,38 % poids de phosphore et 1,05 % poids de chlore.

### Exemple 8 (selon l'invention) :

### Préparation d'un catalyseur H : Pt-Sn/(Al2O3-Sn-In-P)-Cl

Un support est préparé en ciblant les mêmes teneurs en indium et phosphore que pour l'exemple 4, mais avec 0,2% poids d'étain. Le support ainsi obtenu présente une surface BET de 182 m²/g.

Un catalyseur H est préparé sur ce support, en déposant 0,35 % poids de platine, 0,2 % poids supplémentaire d'étain de façon à obtenir 0,4% poids d'étain et 1% poids de chlore sur le catalyseur final.

A 100 g du support alumine contenant de l'étain et de l'indium, on ajoute 400 cm³ d'une solution aqueuse d'acide hexachloroplatinique et d'acide chlorhydrique. On laisse en contact 4 heures puis on essore. On sèche à 90 °C puis on met en contact avec 200 cm³ d'une solution aqueuse du tétrachlorure d'étain en présence d'acide chlorhydrique. On laisse en contact 4 heures, on essore, on sèche à 120°C puis on calcine pendant 2 heures à 500 °C sous un débit d'air de 100 litres par heure, avec une vitesse de montée en température de 7 °C par minute. Le catalyseur H obtenu après calcination contient 0,36 % poids de platine, 0,41 % poids d'étain, 0,29 % poids d'indium, 0,41 % poids de phosphore et 0,99 % poids de chlore.

### Exemple 9 (selon l'invention) :

### Préparation d'un catalyseur I : Pt-Sn/(Al2O3-Sn-Sb-P)-Cl

Un support de billes d'alumine, contenant 0,1 % poids d'étain, 0,4 % poids d'antimoine et 0,4 % poids de phosphore, avec un diamètre moyen de 1,2 mm, est préparé de manière similaire à l'exemple 4 en utilisant du dichlorure d'étain, du nitrate de gallium et de l'acide phosphorique. Le support ainsi obtenu présente une surface BET de 191 m²/g.

Un catalyseur I est préparé à partir de ce support, avec les mêmes teneurs en platine, étain et chlore que pour l'exemple 7. Le catalyseur G obtenu après calcination contient 0,29 % poids de platine, 0,30 % poids d'étain, 0,32 % poids d'indium, 0,42 % poids de phosphore et 1,10 % poids de chlore.

### Exemple 10 Caractérisations Môssbauer des catalyseurs A à I

Les catalyseurs A à I sont réduits sous débit d'hydrogène à 450 °C pendant deux heures et transférés à l'abri de l'air dans une cellule étanche en verre, adaptée à l'appareillage Mössbauer. Les valeurs des déplacements isomériques et d'éclatements quadripolaires des catalyseurs A à I des exemples 1 à 9 ont été déterminées selon les méthodes présentées dans la description et sont indiquées dans le tableau 1.

**tableau 1 : valeurs des déplacements isomériques et d'éclatements quadripolaires des catalyseurs A à I**

| Catalyseur | Caractérisation Mössbauer | | | |
|---|---|---|---|---|
| | δ (mm/s) | Δ (mm/s) | % | attribution |
| | 0,05 | 0,79 | 64 | Sn^{IV} |
| A | 0,20 | 1,60 | 11 | Sn^{IV} |
| | 2,64 | 1,30 | 11 | Sn^{II} |
| | 3,60 | 1,60 | 14 | Sn^{II} |
| B | 0,01 | 0,83 | 69 | Sn^{IV} |
| | 2,28 | 1,59 | 16 | Sn^{II} |
| | 3,29 | 2,04 | 15 | Sn" |
| | 0,05 | 0,78 | 52 | Sn^{IV} |
| C | 0,08 | 1,25 | 23 | Sn^{IV} |
| | 2,51 | 1,21 | 11 | Sn^{II} |
| | 3,50 | 1,90 | 14 | Sn^{II} |
| | 0,03 | 0,88 | 81 | Sn^{IV} |
| D | 3,65 | 1,40 | 13 | Sn^{IV} |
| | 1,90 | 0,40 | 6 | Sn⁰ (en alliage PtSn) |
| | 0,02 | 0,89 | 79 | Sn^{IV} |
| E | 3,72 | 1,38 | 15 | Sn" |
| | 1,88 | 0,44 | 6 | Sn⁰ (en alliage PtSn) |
| | 0,05 | 0,79 | 55 | Sn^{IV} |
| F | 0,10 | 1,24 | 23 | Sn^{IV} |
| | 2,57 | 1,28 | 12 | Sn" |
| | 3,52 | 1,88 | 15 | Sn" |
| | 0,05 | 0,79 | 47 | Sn^{IV} |
| G | 0,21 | 1,60 | 28 | Sn^{IV} |
| | 2,63 | 1,28 | 13 | Sn^{II} |
| | 3,61 | 1,61 | 12 | Sn^{II} |
| | 0,04 | 0,85 | 78 | Sn^{IV} |
| H | 3,58 | 1,49 | 15 | Sn" |
| | 1,90 | 0,38 | 7 | Sn⁰ (en alliage PtSn) |
| | 0,03 | 0,89 | 83 | Sn^{IV} |
| I | 3,59 | 1,41 | 12 | Sn^{II} |
| | 1,91 | 0,40 | 5 | Sn⁰ (en alliage PtSn) |

### Exemple 11 : Évaluation des performances des catalyseurs A à I en reformage catalytique

Des échantillons des catalyseurs dont les préparations ont été décrites dans les exemples 1 à 9 ont été mis en oeuvre dans un lit réactionnel adapté à la conversion d'une charge hydrocarbonée, de type naphta issu de la distillation de pétrole. Ce naphta admet la composition suivante (en masse) :
- 52,6 % en composés paraffiniques,
- 31,6 % en naphtènes,
- 15,8 % en molécules aromatiques,
pour une densité totale de 0,759 g/cm³,

L'indice d'octane recherche de la charge est proche de 55.

Après chargement dans le réacteur, les catalyseurs sont activés par traitement thermique sous atmosphère d'hydrogène pur, durant une période de 2h à 490 °C.

L'évaluation des performances catalytiques est effectuée dans des conditions de réactions de reformage, en présence d'hydrogène et du naphta décrit précédemment. En particulier, les conditions de mise en oeuvre et de comparaison des catalyseurs sont les suivantes :
- pression du réacteur maintenu à 8barg (0,8 MPag),
- débit de charge de 2,0 kg/h par kg de catalyseur,
- rapport molaire hydrogène/hydrocarbures de la charge : 4

La comparaison est effectuée à iso qualité d'indice d'octane recherche des effluents liquides (appelé reformats) résultant de la conversion catalytique de la charge. La comparaison est effectuée pour un indice d'octane recherche de 104.

**tableau 2 : performances des catalyseurs**

| Catalyseur | Rendement C5+ à 148h (% poids) | Rendement C4- à 148h (% poids) | Désactivation (°C/h) | Coke (% poids/h) |
|---|---|---|---|---|
| A | 88,38 | 8,37 | +0,088 | +0,034 |
| B | 88,79 | 8,05 | +0,140 | +0,038 |
| C | 88,29 | 8,39 | +0,099 | +0,033 |
| D | 89,36 | 7,34 | +0,084 | +0,026 |
| E | 89,12 | 7,58 | +0,099 | +0,030 |
| F | 88,64 | 8,11 | +0,102 | +0,034 |
| G | 88,51 | 8,23 | +0,092 | +0,038 |
| H | 89,22 | 7,45 | +0,085 | +0,029 |
| I | 89,25 | 7,48 | +0,089 | +0,029 |

Les catalyseurs selon l'invention (catalyseurs D, E, H et I) présentent une sélectivité améliorée (rendement en C5+ plus important) et une stabilité améliorée (teneurs en coke plus faibles).

## Revendications

1. Catalyseur comprenant au moins un métal M du groupe du platine, de l'étain, un promoteur phosphore, un composé halogéné, un support poreux d'alumine et au moins un promoteur X1 sélectionné dans le groupe constitué par le gallium, l'indium, l'antimoine, ledit catalyseur sous forme réduite possédant par spectroscopie Mössbauer de ¹¹⁹Sn un signal présentant une valeur d'éclatement quadripolaire comprise entre 0 et 0,45 mm/s, et un déplacement isomérique IS compris entre 1,5 et 2,4 mm/s par rapport à CaSnO₃, ledit signal représentant entre 1 et 30 % de l'aire totale des signaux, ledit catalyseur étant préparé par un procédé de préparation comprenant les étapes suivantes
a) introduction du ou des promoteurs X1 et du phosphore à un sol d'un précurseur d'alumine préformé, puis mise en forme du support,
b) introduction de l'étain lors de l'introduction du ou des promoteurs X1 et du phosphore lors de l'étape a) et avant la mise en forme du support, les étapes a) et b) étant simultanées,
c) séchage du produit obtenu à l'issue de l'étape b),
d) calcination du produit obtenu à l'étape c) à une température comprise entre 350 et 650 °C,
e) dépôt d'au moins un métal M du groupe du platine,
f) séchage sous flux du gaz neutre ou sous flux de gaz contenant de l'oxygène, à une température modérée et n'excédant pas 150 °C,
g) calcination du produit obtenu à l'étape f) à une température comprise entre 350 et 650 °C.

2. Catalyseur selon la revendication 1 dans lequel le rapport atomique Sn/M est compris entre 0,5 et 4,0.

3. Catalyseur selon l'une des revendications 1 à 2 dans lequel le rapport X1/M est compris entre 0,1 et 5,0.

4. Catalyseur selon l'une des revendications 1 à 3 dans lequel le rapport P/M est compris entre 0,2 et 30,0.

5. Catalyseur selon l'une des revendications 1 à 4 dans lequel la teneur en métal M est comprise entre 0,01 à 5 % poids.

6. Catalyseur selon l'une des revendications 1 à 5 dans lequel le métal M est le platine ou le palladium.

7. Catalyseur selon l'une des revendications 1 à 6 dans lequel le composé halogéné est sélectionné dans le groupe constitué par le fluor, le chlore, le brome et l'iode.

8. Catalyseur selon l'une des revendications 1 à 7 dans lequel la teneur en composé halogéné est comprise entre 0,1 à 15,0 % poids.

9. Catalyseur selon l'une des revendications 1 à 8 dans lequel le composé halogéné est le chlore et la teneur en chlore est comprise entre 0,1 et 5,0 % poids.

## Patentansprüche

1. Katalysator, umfassend mindestens ein Metall M der Gruppe aus Platin, Zinn, einem Phosphorpromotor, einer halogenierten Verbindung, einem porösen Aluminiumoxidträger und mindestens einem Promotor X1, ausgewählt aus der Gruppe bestehend aus Gallium, Indium, Antimon, wobei der Katalysator in reduzierter Form mittels ¹¹⁹Sn-Mössbauer-Spektroskopie ein Signal besitzt, das eine quadrupolare Aufspaltung im Bereich zwischen 0 und 0,45 mm/s und eine isomere Verschiebung IV im Bereich zwischen 1,5 und 2,4 mm/s, bezogen auf CaSnO₃, aufweist, wobei das Signal zwischen 1 und 30 % der Gesamtfläche der Signale darstellt, wobei der Katalysator durch ein Herstellungsverfahren hergestellt wird, das die folgenden Schritte umfasst:
a) Einführen des oder der Promotoren X1 und des Phosphorpromotors in ein Sol eines vorgeformten Aluminiumoxidvorläufers, dann Formen des Trägers,
b) Einführen von Zinn während der Einführung des oder der Promotoren X1 und des Phosphorpromotors während des Schritts a) und vor dem Formen des Trägers, wobei die Schritte a) und b) gleichzeitig stattfinden,
c) Trocknen des am Ende von Schritt b) erhaltenen Produkts,
d) Kalzinieren des in Schritt c) erhaltenen Produkts bei einer Temperatur im Bereich zwischen 350 und 650 °C,
e) Abscheiden mindestens eines Metalls M der Gruppe aus Platin,
f) Trocknen unter einem Neutralgasstrom oder einem Gasstrom, der Sauerstoff enthält, bei einer mittleren Temperatur von nicht mehr als 150 °C,
g) Kalzinieren des in Schritt f) erhaltenen Produkts bei einer Temperatur im Bereich zwischen 350 und 650 °C.

2. Katalysator nach Anspruch 1, wobei das Atomverhältnis Sn/M im Bereich zwischen 0,5 und 4,0 liegt.

3. Katalysator nach einem der Ansprüche 1 bis 2, wobei das Verhältnis X1/M im Bereich zwischen 0,1 und 5,0 liegt.

4. Katalysator nach einem der Ansprüche 1 bis 3, wobei das Verhältnis P/M im Bereich zwischen 0,2 und 30,0 liegt.

5. Katalysator nach einem der Ansprüche 1 bis 4, wobei der Gehalt an Metall M im Bereich zwischen 0,01 bis 5 Gew.-% liegt.

6. Katalysator nach einem der Ansprüche 1 bis 5, wobei das Metall M Platin oder Palladium ist.

7. Katalysator nach einem der Ansprüche 1 bis 6, wobei die halogenierte Verbindung ausgewählt ist aus der Gruppe bestehend aus Fluor, Chlor, Brom und lod.

8. Katalysator nach einem der Ansprüche 1 bis 7, wobei der Gehalt an halogenierter Verbindung im Bereich zwischen 0,1 bis 15,0 Gew.-% liegt.

9. Katalysator nach einem der Ansprüche 1 bis 8, wobei der die halogenierte Verbindung Chlor ist und der Chlorgehalt im Bereich zwischen 0,1 und 5,0 Gew.-% liegt.

## Claims

1. A catalyst comprising at least one metal M from the platinum group, tin, a phosphorus promoter, a halogenated compound, a porous support of alumina and at least one promoter X1 selected from the group constituted by gallium, indium, antimony, said catalyst in the reduced form having, in ¹¹⁹Sn Mössbauer spectroscopy, a signal with a quadripole splitting value in the range 0 to 0.45 mm/s and an isomer shift, IS, in the range 1.5 to 2.4 mm/s with respect to CaSnO₃, said signal representing in the range 1% to 30% of the total area of the signals, said catalyst being prepared by a process of preparation comprising the following steps:
a) introducing the promoter or the promoters X1 and phosphorus to a preformed sol of alumina precursor, and then shaping of the support,
b) introducing tin during the introduction of the promoter or the promoters X1 and phosphorus of step a) and before the shaping of the support, the steps a) and b) being simultaneous;
c) drying the product obtained at the end of step b);
d) calcining the product obtained in step c) at a temperature in the range 350°C to 650°C;
e) depositing at least one metal M from the platinum group;
f) drying in a stream of neutral gas or a stream of gas containing oxygen, at a moderate temperature not exceeding 150°C;
g) calcining the product obtained in step f) at a temperature in the range 350°C to 650°C.

2. A catalyst according to claim 1, in which the atomic ratio Sn/M is in the range 0.5 to 4.0.

3. A catalyst according to claim 1 or claim 2, in which the ratio X1/M is in the range 0.1 to 5.0.

4. A catalyst according to one of claims 1 to 3, in which the ratio P/M is in the range 0.2 to 30.0.

5. A catalyst according to one of claims 1 to 4, in which the quantity of metal M is in the range 0.01% to 5% by weight.

6. A catalyst according to one of claims 1 to 5, in which the metal M is platinum or palladium.

7. A catalyst according to one of claims 1 to 6, in which the halogenated compound is selected from the group constituted by fluorite, chloride, bromine and iodine.

8. A catalyst according to one of claims 1 to 7, in which the quantity of halogenated compound is in the range 0.1% to 15.0% by weight.

9. A catalyst according to one of claims 1 to 8, in which the halogenated compound is chloride and the chloride content is in the range 0.1% to 5.0% by weight.
